# EUROPEAN PATENT APPLICATION

(11) **EP 4 832 408 A1**
(43) Date of publication of application: **28.10.2026**
(21) Application number: 26173579.9
(22) Date of filing: 21.04.2026
(51) Int. Cl.: H04L 9/00

(54) **SELECTING DATA USING HOMOMORPHIC ENCRYPTION**

(30) Priority: 23.04.2025 US 202519187565
(71) Applicant: Beijing Zitiao Network Technology Co., Ltd., Beijing 100190 (CN); Bytedance Technology Ltd., KY1 - 1205 Grand Cayman Cayman Islands (KY)
(72) Inventor: Lu, Wenjie, Chaoyang District, Beijing, 100028 (CN); Du, Jian, Culver City, CA, 90230 (US)
(74) Representative: Grünecker Patent- und Rechtsanwälte PartG mbB

(57) **Abstract**

Methods (300), systems (400), and apparatus, including computer programs encoded on computer storage media are described for selecting data using homomorphic encryption. One example method includes: encrypting (301), by a first party and using a first encryption method, N plaintext values to obtain one or more ciphertext encapsulations, wherein a plurality of plaintext values of the N plaintext values are encrypted in each of the one or more ciphertext encapsulations; sending (302), by the first party, the one or more ciphertext encapsulations to a second party; extracting (303), by the second party, K ciphertext values from the one or more ciphertext encapsulations based on a second encryption method, wherein K is an integer greater than 0 and less than N; masking (304), by the second party, the K ciphertext values to obtain masked ciphertexts; and sending (305), by the second party, the masked ciphertexts to the first party for decryption.

## Description

### TECHNICAL FIELD

This specification relates to data encryption, and in particular, to selecting data using homomorphic encryption.

### BACKGROUND

Homomorphic encryption (HE) is an encryption technique that allows computation to be directly performed on ciphertexts. By using homomorphic encryption, computations can be performed on encrypted data without decrypting it, and if the result of these computations is decrypted, the decrypted result is identical to the result obtained by performing the same computations on unencrypted data.

### SUMMARY

This specification describes technologies for selecting data using homomorphic encryption, for example, in secure MPC.

According to a first aspect, a method for selecting data using homomorphic encryption is provided. The method includes: encrypting, by a first party and using a first encryption method, N plaintext values to obtain one or more ciphertext encapsulations, wherein a plurality of plaintext values of the N plaintext values are encrypted in each of the one or more ciphertext encapsulations, wherein N is an integer greater than 1; sending, by the first party, the one or more ciphertext encapsulations to a second party; extracting, by the second party, K ciphertext values from the one or more ciphertext encapsulations based on a second encryption method, wherein K is an integer greater than 0 and less than N; masking, by the second party, the K ciphertext values to obtain masked ciphertexts; and sending, by the second party, the masked ciphertexts to the first party for decryption.

With reference to the first aspect, in some implementations, the first party participates in secret sharing with the second party. In some implementations, the first party receives the masked ciphertexts from the second party, and the first party does not learn the K ciphertext values selected by the second party.

With reference to the first aspect, in some implementations, the first encryption method includes Ring Learning with Error (RLWE) cryptography, and the second encryption method includes Learning with Error (LWE) cryptography.

With reference to the first aspect, in some implementations, wherein the encrypting, by a first party and using a first encryption method, N plaintext values to obtain one or more ciphertext encapsulations includes: determining, by the first party, a parameter for the first encryption method, wherein the parameter is used to determine a size of one ciphertext encapsulation; dividing the N plaintext values into one or more groups based on the parameter; and encrypting each of the one or more groups into a respective ciphertext encapsulation.

With reference to the first aspect, in some implementations, the masking, by the second party, the K ciphertext values to obtain masked ciphertexts includes: generating, by the second party, K random values corresponding to the K ciphertext values; and performing mathematical operations on the K ciphertext values with the K random values to obtain K new ciphertexts as the masked ciphertexts.

With reference to the first aspect, in some implementations, the method further includes: performing, by the second party, a packing operation on the masked ciphertexts to obtain a reduced ciphertext. In some implementations, the sending, by the second party, the masked ciphertexts to the first party for decryption includes: sending, by the second party, the reduced ciphertext to the first party.

With reference to the first aspect, in some implementations, performing the packing operation on the masked ciphertexts to obtain a reduced ciphertext includes: encrypting, using the first encryption method, the masked ciphertexts to obtain the reduced ciphertext.

According to a second aspect, a method for selecting data using homomorphic encryption is provided. The method includes: encrypting, by a first party and using a first encryption method, N plaintext values to obtain one or more ciphertext encapsulations, wherein a plurality of plaintext values of the N plaintext values are encrypted in each of the one or more ciphertext encapsulation, wherein N is an integer greater than 1; sending, by the first party, the one or more ciphertext encapsulations to a second party; and receiving masked ciphertexts from the second party, wherein the masked ciphertexts are obtained by masking K ciphertext values extracted from the one or more ciphertext encapsulations based on a second encryption method, K is an integer greater than 0 and less than N.

With reference to the second aspect, in some implementations, the first party participates in secret sharing with the second party. In some implementations, the first party receives the masked ciphertexts from the second party for decryption, the first party does not learn the K ciphertext values selected by the second party, and the first party does not share unselected ciphertext values from the N ciphertext values with the second party.

With reference to the second aspect, in some implementations, the first encryption method includes Ring Learning with Error (RLWE) cryptography, and the second encryption method includes Learning with Error (LWE) cryptography.

With reference to the second aspect, in some implementations, the encrypting, by a first party and using a first encryption method, N plaintext values to obtain one or more ciphertext encapsulations includes: determining, by the first party, a parameter for the first encryption method, wherein the parameter is used to determine a size of one ciphertext encapsulation; dividing the N plaintext values into one or more groups based on the parameter; and encrypting each of the one or more groups into a respective ciphertext encapsulation.

With reference to the second aspect, in some implementations, receiving masked ciphertexts from the second party for decryption includes: receiving a reduced ciphertext from the second party, wherein the reduced ciphertext is obtained by performing a packing operation on the masked ciphertexts.

With reference to the second aspect, in some implementations, the masked ciphertexts are encrypted, using the first encryption method, to obtain the reduced ciphertext.

With reference to the second aspect, in some implementations, the method further includes: decrypting the reduced ciphertext.

According to a third aspect, a method for selecting data using homomorphic encryption is provided. The method includes: receiving, by a second party, one or more ciphertext encapsulations from a first party, wherein each of the one or more ciphertext encapsulations includes a plurality of plaintext values of N plaintext values that are encrypted using a first encryption method, N is an integer greater than 1; extracting, by the second party, K ciphertext values from the one or more ciphertext encapsulations based on a second encryption method, wherein K is an integer greater than 0 and less than N; masking, by the second party, the K ciphertext values to obtain masked ciphertexts; and sending, by the second party, the masked ciphertexts to the first party for decryption.

With reference to the third aspect, in some implementations, the second party participates in secret sharing with the first party. In some implementations, the second party does not learn unselected ciphertext values from the N ciphertext values.

With reference to the third aspect, in some implementations, the first encryption method includes Ring Learning with Error (RLWE) cryptography, and the second encryption method includes Learning with Error (LWE) cryptography.

With reference to the third aspect, in some implementations, the masking, by the second party, the K ciphertext values to obtain masked ciphertexts includes: generating, by the second party, K random values corresponding to the K ciphertext values; and performing mathematical operations on the K ciphertext values with the K random values to obtain K new ciphertexts as the masked ciphertexts.

With reference to the third aspect, in some implementations, the method further includes: performing, by the second party, a packing operation on the masked ciphertexts to obtain a reduced ciphertext. In some implementations, the sending, by the second party, the masked ciphertexts to the first party for decryption includes: sending, by the second party, the reduced ciphertext to the first party.

With reference to the third aspect, in some implementations, performing, by the second party, the packing operation on the masked ciphertexts to obtain a reduced ciphertext includes: encrypting, using the first encryption method, the masked ciphertexts to obtain the reduced ciphertext.

According to a fourth aspect, one or more computer-readable storage media is provided. The one or more computer-readable storage media stores one or more instructions that, when executable by one or more computers, cause the one or more computers to perform the method according to one or more of the first aspect or one or more implementations of the first aspect, the second aspect or one or more implementations of the second aspect, or the third aspect or one or more implementations of the third aspect.

According to a fifth aspect, a computer-implemented system is provided. The computer-implemented system includes one or more computers and one or more computer memory devices interoperably coupled with the one or more computers. The one or more computer memory devices have computer-readable storage media storing one or more instructions that, when executed by the one or more computers, perform the method according to one or more of the first aspect or one or more implementations of the first aspect, the second aspect or one or more implementations of the second aspect, or the third aspect or one or more implementations of the third aspect.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 illustrates an example process of data selection in multi-party computation (MPC).
FIG. 2 illustrates another example process of data selection in MPC.
FIG. 3 is a swim lane diagram of an example process for selecting data using homomorphic encryption.
FIG. 4 is an example computing system.

Like reference numbers and designations in the various drawings indicate like elements.

### DETAILED DESCRIPTION

Homomorphic encryption (HE) is an encryption technique that allows computation to be directly performed on ciphertexts. By using homomorphic encryption, computations (e.g., addition, subtraction, etc.) can be performed on encrypted data without decrypting it, and if the result of these computations is decrypted, the decrypted result is identical to the result obtained by performing the same computations on unencrypted data. As an example, the following equations (1) and (2) respectively show addition and subtraction under homomorphic encryption. $Enc \left(x\right) + Enc \left(y\right) = Enc \left(x+y mod p\right)$ (1) $Enc \left(x\right) - Enc \left(y\right) = Enc \left(x-y mod p\right)$ (2)

In this case, without the decryption key, information about the plaintext x and *y* cannot be inferred from the ciphertext *Enc*(*x*) and *Enc*(*y*)*.* Common types of homomorphic encryption include partially homomorphic encryption (PHE), such as Paillier homomorphic encryption and ElGamal homomorphic encryption, and fully homomorphic encryption (FHE), such as Learning with Errors (LWE)-based homomorphic encryption and Ring Learning with Errors (RLWE)-based homomorphic encryption, where Paillier, ElGamal, and LWE-based homomorphic encryption only allow to encrypt one value at a time. Take LWE-based homomorphic encryption as an example, an obtained LWE ciphertext may correspond to only a single plaintext value. Differently, RLWE-based homomorphic encryption can encrypt multiple values at a time. In other words, an obtained RLWE ciphertext may correspond to multiple plaintext values, and the number of the plaintext values can be determined by a parameter m. For example, if the parameter *m* is set to 4096 (i.e., *m* = 4096), the RLWE-based homomorphic encryption can encrypt 4096 plaintext values into a RLWE ciphertext at one time. Thereby, using RLWE-based homomorphic encryption can significantly reduce the time required to encrypt large batches of data.

Techniques described in this disclosure use homomorphic encryption to achieve data selection in secure multi-party computation (MPC). In some implementations, the described techniques can improve efficiency of data selection with data privacy and security protection. For example, the described techniques allow encrypting N plaintext values to obtain one or more ciphertext encapsulations by one party (such as a data provider or a sender) participating in MPC and transmitting theses ciphertext encapsulations to one or more other parties (such as a data selector or a chooser) participating the MPC for data selection, without the data provider knowing what the data selector has selected from the ciphertext encapsulations, and the data selector knowing those unselected data in the ciphertext encapsulations.

In some implementations, the described techniques also leverage homomorphic encryption, to allow performing computations involved in data selection directly on ciphertexts without decryption, thus ensuring data privacy and security and making the encryption process more efficient. As an example method for selecting data using homomorphic encryption, in some implementations, a first party may encrypt N plaintext values using a first encryption method (e.g., RLWE) to obtain one or more ciphertext encapsulations, where N is an integer greater than 1, and send the one or more ciphertext encapsulations to a second party. The second party may extract K ciphertext values from the received one or more ciphertext encapsulations based on a second encryption method (e.g., LWE), where K is an integer greater than 0 and less than N, and mask the K ciphertext values to obtain masked ciphertexts. In some implementations, the second party may then send the masked ciphertexts to the first party for decryption.

In some implementations, the data selection (or Oblivious Selection), which is a cryptographic technique that allows one party (e.g., the chooser or the data selector) to select one of many options provided by another party (e.g., the sender or the data provider) without the sender knowing which option was chosen. At the same time, the chooser does not learn the content of the options that were not selected. A common form of such data selection can be 1-out-of-2, which can be extended to a more general case of K-out-of-N (0 < K <N). In some implementations, the data selection can be in used in many practical applications, for example, for AI/ML model training and interference in a recommendation system, where the sender can be a recommendation platform for providing recommended products (including goods and/or service) to users or customers, and the chooser can be a product provider that provides the products. As an example, the sender can be a social media platform, and the chooser can be an advertiser.

The described techniques can achieve one or more technical benefits/advantages. In some implementations, the described techniques can reduce time for encrypting plaintext values. For example, by encrypting plaintext values using a first encryption method to obtain one or more ciphertext encapsulations, a large amount of data can be encrypted at once efficiently (e.g., in a few seconds or less). Moreover, in some implementations, by sending the one or more ciphertext encapsulations instead of N single ciphertexts, the transmission overhead of ciphertext can be reduced. Thus, the described techniques can improve the efficiency of data selection, while ensuring data privacy and security.

As a specific example, one of the described techniques may leverage LWE-based and RLWE-based homomorphic encryption for the functionality of data selection (e.g., oblivious selection or in any other application). In some implementations, the described techniques include setting a parameter (*m*) of the RLWE-based homomorphic encryption to a particular value, e.g., *m* = 4096. Then, a single ciphertext encapsulation obtained by using the RLWE-based homomorphic encryption (or called as "RLWE ciphertext") can be viewed as the encapsulation of multiple (i.e., 4096) LWE ciphertexts. In this case, any of these LWE ciphertexts can be extracted from the RLWE ciphertext. The "ciphertext encapsulation" here may also called as RLWE-LWE ciphertext encapsulation. As a result, a first party (e.g., the sender) sends ciphertext encapsulation to a second party (e.g., the chooser), and the second party also returns ciphertext encapsulation to the first party, where the number of values included in the ciphertext encapsulation returned by the second party is significantly smaller than the number of values included in the ciphertext encapsulation sent by the first party. In some implementations, with the described ciphertext encapsulation, the outer layer of the ciphertext encapsulation can be regarded as RLWE-based encryption, and can provide high-speed encryption performance and reduce communication overhead. The inner layer of the ciphertext encapsulation can be regarded as LWE-based encryption, and can enable homomorphic computation (e.g., subtraction). By using ciphertext encapsulation and further a extraction method based on the LWE-based homomorphic encryption, the described techniques can achieve, for example, quick encryption of large batches of data (by using RLWE-based homomorphic encryption) and K-out-of-N selection functionality (via extraction method based on the LWE-based homomorphic encryption). Additionally, the described techniques can reduce the ciphertext transmission overhead since the size of a ciphertext encapsulation is much smaller compared to the size of N single ciphertexts.

In some implementations, the described techniques can be especially advantageous for applications of K-out-of-N selection where the magnitude K is significantly smaller than N. As an example, the sender provides 10⁷ data, and the chooser needs to select 10⁴ data (that is, N= 10⁷ while K = 10⁴). As a result, by using the described techniques, encryption time for encrypting 10^{^7} data is reduced. For example, compared to an existing scheme (such as the Paillier homomorphic encryption), the RLWE-based homomorphic encryption can reduce the encryption time for the 10⁷ data from 2.8 hours to 1.03 seconds. The RLWE-based homomorphic encryption can also reduce the size of ciphertexts sent from the sender to the provider, thereby reducing the communication overhead. For example, the size of 10⁷ ciphertexts obtained by Paillier homomorphic encryption is 4.7GB, whereas the size of the same number of ciphertexts obtained by RLWE-based homomorphic encryption is only 0.14GB. Moreover, the described techniques introduce a compression method based on the LWE-based homomorphic encryption method before sending the K selected data back to the sender, thus further reducing the communication overhead. For example, the size of 10,000 selected data (such as 10,000 LWE ciphertexts) is 532MB, while the size of the 10,000 selected data after compression (for example, compressing 10,000 LWE ciphertexts into 3 RLWE ciphertexts) can be reduced to 0.32MB. Given that the value of K is relatively small, the computational burden of the compression method is minimal, but the size of ciphertexts returned by the chooser can be significantly reduced via the compression method. In some implementations, different or additional advantages can be achieved.

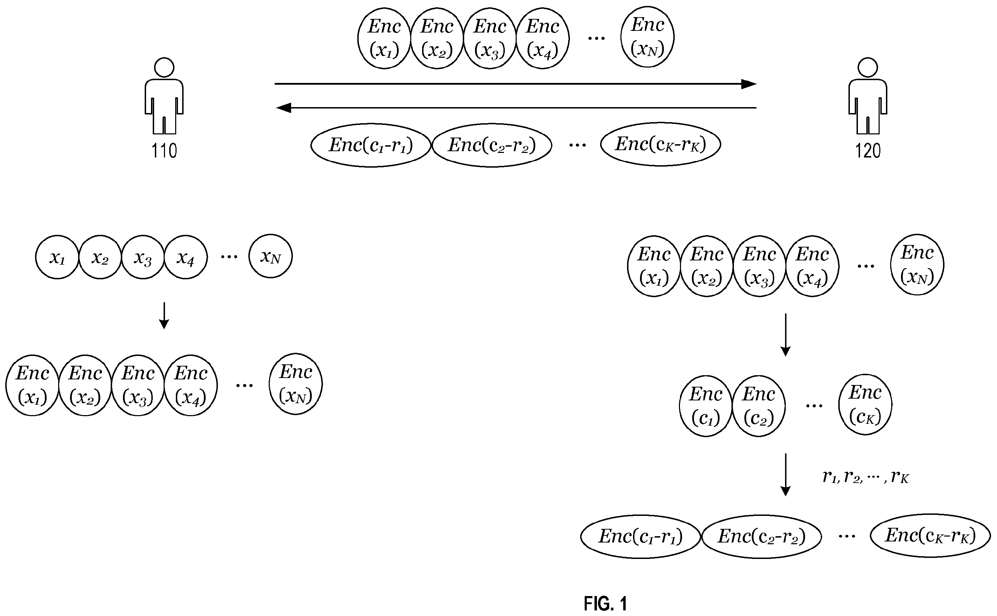

FIG. 1 illustrates an example process of data selection in secure MPC. Secure MPC is a technique developed for data collaboration, while maintaining data privacy and security. In general, secure MPC allows parties to jointly evaluate or analyze their respective private data, or jointly train a prediction model using their respective private data, without sharing the private data with others. In some implementations, the secure MPC allows parties to jointly compute a function over their private input without revealing the private input to the other parties. While in secure MPC, any suitable number of parties can cooperate, for simplicity, the example process of data selection is illustrated with two parties in FIG. 1: a first party 110 and a second party 120, as shown in FIG. 1. The parties here can represent, for example, entities that seek to collaborate on data processing or data training without revealing the private data of either party. As an example, the first party 110 and the second party 120 participate in data selection in secure MPC, where the first party 110 is a data provider and the second party 120 is a chooser.

Referring to FIG. 1, the first party 110 provides N pieces of data (denoted as *x*₁, *x*₂, *x*₃, ..., *x_{N}*) to the second party 120. The second party 120 needs to select K items of the N pieces of data without the first party 110 knowing which items were selected, where K is an integer greater than 0 and less than N. Meanwhile, the second party 120 does not learn the content of the unselected data. Such a process as illustrated in FIG. 1 is also known as K-out-of-N selection. As an example, N pieces of data can be user data of a social media platform, and K items of the N pieces of data can be data of users of interest to an advertiser.

In some implementations, the N pieces of data are encrypted before being sent to the second party 120. For example, the first party 110 may use such as Paillier homomorphic encryption to encrypt the N pieces of data (*x*₁, *x*₂, *x*₃, ..., *x_{N}*), so as to obtain corresponding N ciphertexts (denoted as *Enc*(*x*₁), *Enc*(*x*₂), *Enc*(*x*₃), ..., *Enc*(*x_{N}*))*.* In some implementations, the first party 110 may perform homomorphic encryption N times to realize the encryption of N pieces of data (*x*₁, *x*₂, *x*₃, ..., *x_{N}*). The first party 110 then sends the N ciphertexts (*Enc*(*x*₁), *Enc*(*x*₂), *Enc*(*x*₃), *..., Enc*(*x_{N}*)) to the second party 120.

In some implementations, the second party 120 selects K items (denoted as *Enc*(*c*₁), *Enc*(*c*₂), ..., *Enc*(*c_{K}*)) from the received N ciphertexts. In some implementations, the second party 120 further masks the K selected items to prevent the first party 110 from knowing which items are selected. For example, the second party 120 may generate K random values (denoted as *r*₁, *r*₂, ..., *r_{K}*) as masks, and each random value corresponds to one of the K selected items. As an example, the random value *r*₁ is generated as a mask for the selected item *Enc*(*c*₁); the random value *r*₂ is generated as a mask for the selected item *Enc*(*c*₂); and so on. In some implementations, since the ciphertexts are obtained using homomorphic encryption, the second party 120 may, for example, add the generated random values directly to the selected items to obtain masked ciphertexts. For example, the second party 120 may add each of the K random values (*r*₁, *r*₂, ..., *r_{K}*) to a corresponding item of the K selected items (*Enc*(*c*₁), *Enc*(*c*₂) *, ..., Enc*(*c_{K}*) ), and obtain K masked ciphertexts (denoted as *Enc*(*c*₁ *- r*₁) , *Enc*(*c*₂ *- r₂*) , ..., *Enc(c_{K} - r_{K}*)). In some implementations, the second party 120 send the K masked ciphertexts (*Enc*(*c*₁ *- r*₁), *Enc*(*c*₂ - *r*₂), *..., Enc*(*c_{K} - r_{K}*)) to the first party 110.

In some implementations, the first party 110 may perform decryption on the masked ciphertexts. For example, the first party 110 decrypts the K masked ciphertexts received from the second party 120, obtaining the following decrypted values: *c*₁ *- r*₁ mod *q, c*₂ - *r*₂ mod *q, ..., c_{K}* - *r_{K}* mod *q,* wherein *q* is the modulus that ensures the correctness and security of the computation. Since the decryption is performed on the masked ciphertexts, even after the decryption is completed, the first party 110 does not know what the second party 120 has selected.

In some implementations, the decrypted values (*c*₁ *- r*₁ mod *q, c₂* - *r*₂ mod *q, ..., c_{K} - r_{K}* mod *q*) obtained by the first party 110 and the random values (*r*₁, *r*₂, ..., *r_{K}*) generated and held by the second party 120 can be seen as shares of the secrets corresponding to the selected items (*Enc*(*c*₁), *Enc*(*c*₂), *..., Enc*(*c_{K}*)), where the secrets can be denoted as *c*₁, *c*₂, *c*₃, *..., c_{N}.* These secrets (*c*₁, *c*₂, *c*₃, ..., *c_{N}*) can be restored by the first party 110 and the second party 120 sharing their respective shares with each other. For example, in response to the first party 110 sharing the decrypted values (*c*₁ *- r*₁ mod *q, c*₂ - *r*₂ mod *q*, ..., *c_{K} - r_{K}* mod *q*) and the second party 120 sharing the random values (*r*₁, *r*₂, ..., *r_{K}*), the information about the secrets (*c*₁, *c*₂, *c*₃, *..., c_{N}*) can be revealed. It should be noticed that neither party can reveal any information about the secret merely by its own shares. Thus, through the secret sharing technique, the privacy and security of data are improved.

The above-mentioned process of data selection allows the items selected by the second party 120 to be unknown to the first party 110, as well as allowing the unselected items to be not known to the second party 120. Further, such a process of data selection using homomorphic encryption also allows data to be securely and privately shared between the first party 110 and the second party 120.

In some implementations, in order to reduce the encryption time spent by the first party 110 and lower the transmission overhead of transmitting data between the first party 110 and the second party 120, a process of data selection using a combination of LWE-based and RLWE-based homomorphic encryption is provided.

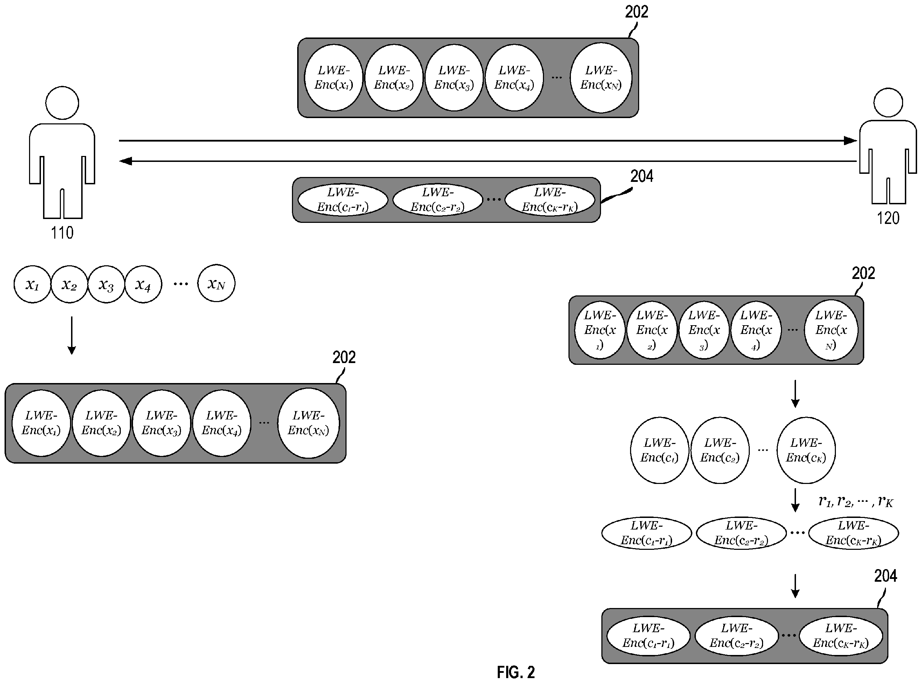

FIG. 2 illustrates another example process of data selection in secure MPC. The example process of data selection is illustrated with the same two parties as shown in FIG. 1, that is, the first party 110 (e.g., data provider) and the second party 120 (e.g., as a data selector or chooser).

Referring to FIG. 2, the first party 110 provides N pieces of data (*x*₁, *x*₂, *x*₃, *..., x_{N}*). In some implementations, the first party 110 encrypts the N pieces of data (*x*₁, *x*₂, *x*₃, ..., *x_{N}*) using a RLWE-based homomorphic encryption to obtain a ciphertext encapsulation 202. In other words, the N pieces of data (*x*₁, *x*₂, *x*₃, ..., *x_{N}*) are encrypted in bulk into a single ciphertext encapsulation 202. The ciphertext encapsulation 202 can be viewed as a encapsulation of N ciphertexts (denoted as *LWE_Enc*(*x*₁), *LWE_Enc*(*x*₂), *LWE_Enc*(*x*₃), *..., LWE_Enc*(*x_{N}*)) obtained using a LWE-based homomorphic encryption. In some other implementations, the N pieces of data (*x*₁, *x*₂, *x*₃, *..., x_{N}*) may be encrypted into a number of ciphertext encapsulations depending on a parameter of RLWE that determines the size of one ciphertext encapsulation. For example, the first party 110 sets the parameter of RLWE to a value of 2000, which means 2000 pieces of data are encrypted into one ciphertext encapsulation. In this case, if the first party 110 provides, for example, 4000 pieces of data, two ciphertext encapsulations are obtained by the first party 110 performing RLWE-based homomorphic encryption on the 4000 pieces of data. In some implementations, by encrypting a plurality of data altogether in bulk to obtain a ciphertext encapsulation, the encryption time and computational complexity can be significantly reduced compared to the total time and computational complexity required by encrypting each piece of the plurality of data individually. For example, the RLWE-based homomorphic encryption method allows encrypting such as ten million data at once in merely a matter of seconds.

In some implementations, the first party 110 sends the ciphertext encapsulation 202 to the second party 120. Since the size of the ciphertext encapsulation 202 is much smaller than the size of multiple single ciphertexts, by sending the ciphertext encapsulation 202 instead of sending N pieces of encrypted data, the communication overhead required for the first party 110 to send ciphertexts to the second party 120 is reduced.

In some implementations, the second party 120 receives the ciphertext encapsulation 202 and performs an LWE-based extraction on the ciphertext encapsulation 202 to extract K items from the ciphertext encapsulation 202. As above mentioned, the ciphertext encapsulation 202 can be viewed as the encapsulation of N ciphertexts obtained using the LWE-based homomorphic encryption. Thus, by performing the LWE-based extraction, it allows K ciphertexts to be extracted through such as homomorphic subtraction from the ciphertext encapsulation 202, where the K ciphertexts can be regarded as K encrypted data obtained using LWE-based homomorphic encryption. For example, in response to receiving the ciphertext encapsulation 202, the second party 120 extracts K items (denoted as *LWE_Enc*(*c*₁), *LWE_Enc*(*c*₂), *..., LWE_Enc*(*c_{K}*)) from the ciphertext encapsulation 202 using an extraction method based on the LWE-based homomorphic encryption.

In some implementations, the second party 120 generates K random values (denoted as *r*₁, *r*₂, *..., r_{K}*) as masks and masks the K items (*LWE_Enc*(*c*₁), *LWE_Enc*(*c*₂), *..., LWE_Enc*(*cₖ*)) with the K random values (*r*₁, *r*₂ , *..., r_{K}*) to obtain K masked ciphertexts (denoted as *LWE_Enc(c₁ - r*₁) *, LWE_Enc*(*c₂ - r*₂) , ..., *LWE_Enc*(*c_{K}* - *r_{K}*)). For example, the second party 120 may perform mathematical operations, such as adding each random value with its corresponding item in the K items, to obtained the K masked ciphertexts (*LWE_Enc*(*c*₁ *- r*₁), *LWE_Enc(c₂ - r*₂), ..., *LWE_Enc*(*c_{K} - r_{K}*)). By masking the K items, the first party 110 cannot learn what the second party 120 extracted from the ciphertext encapsulation 202.

In some implementations, the second party 120 performs a packing operation on the K masked ciphertexts (*LWE_Enc(c*₁ *- r*₁), *LWE_Enc*(*c*₂ *- r*₂), ..., *LWE_Enc*(*c_{K}* - *r_{K}*)) to obtain a reduced ciphertext 204. For example, the second party 120 may pack the K masked ciphertexts using a ciphertext compression technique to compress LWE cyphertexts into RLWE cyphertexts and obtain the reduced ciphertext 204, so as to reduce the size of the ciphertexts to be sent back to the first party 110. In some implementations, the reduced ciphertext 204 can be viewed as a RLWE-based ciphertext encapsulation. In some implementations, the second party 120 then sends the reduced ciphertext 204 to the first party 110. In this case, by compressing the K masked ciphertexts into a ciphertext encapsulation, the size of data to be sent back to the first party 110 is reduced, reducing the communication overhead required for the second party 120 to send ciphertexts to the first party 110.

In some implementations, the first party 110 receives the reduced ciphertext 204 from the second party and performs decryption on the reduced ciphertext 204.

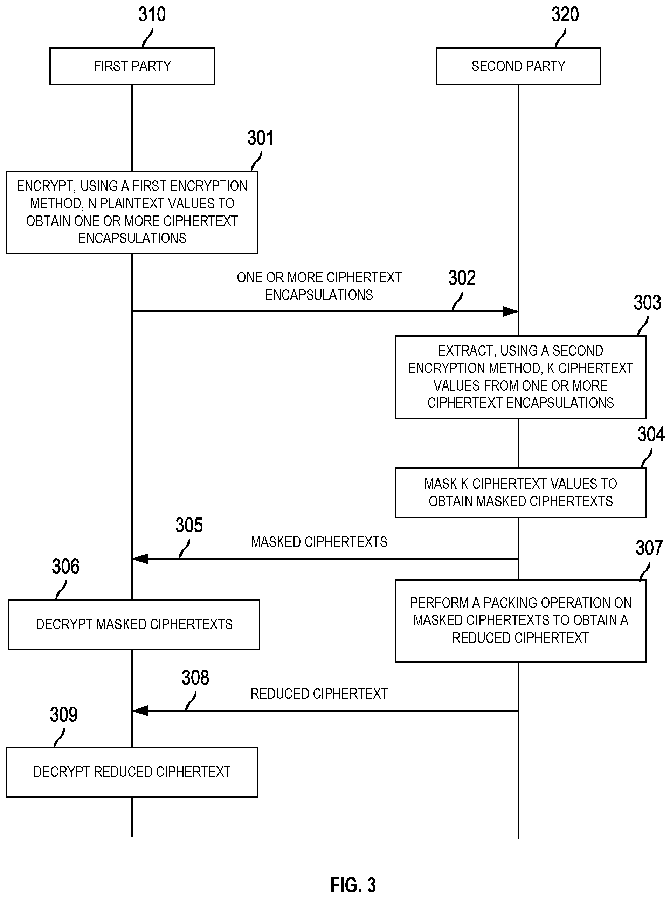

FIG. 3 is a swim lane diagram of an example process 300 for selecting data using homomorphic encryption. In some implementations, the example process 300 can be implemented by two parties participating in the secure MPC (e.g., the first party 110 and the second party 120 shown in FIG. 1 or in FIG. 2) to achieve N-out-of-K data selection. The operations shown in process 300 may not be exhaustive and that other operations can be performed as well before, after, or in between any of the illustrated operations. Further, some of the operations may be omitted, or performed simultaneously or in a different order than shown in FIG. 3.

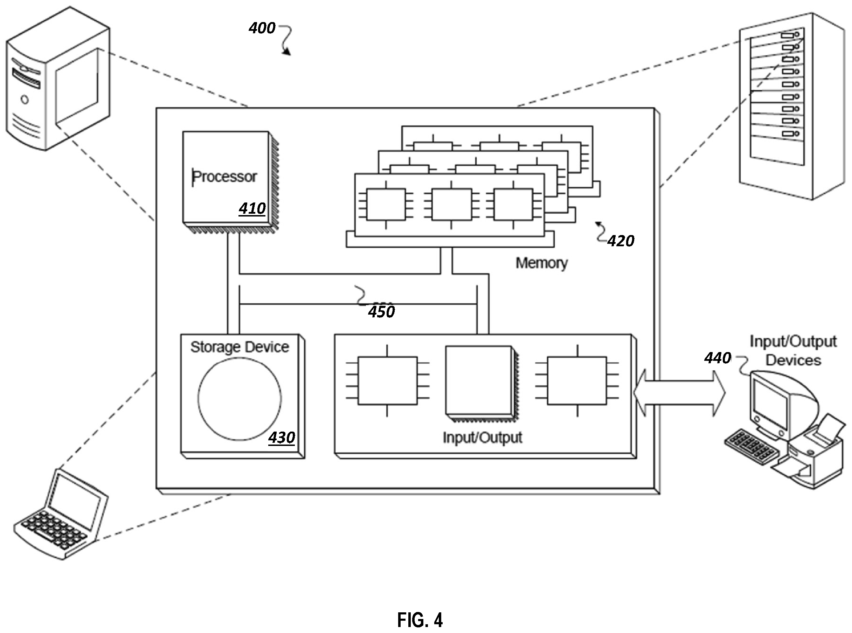

For convenience, the process 300 will be described as being performed by a system of one or more computers (e.g., a server, a device or another data processing apparatus of a party (or simply referred to as a party) participating in the secure MPC implemented by a computer system 400 of FIG. 4), located in one or more locations, and programmed appropriately in accordance with this specification. For example, two parties participating in the secure MPC (e.g., the first party 110 and the second party 120 shown in FIG. 1 or in FIG. 2), when appropriately programmed, can perform the process 300.

According to implementations of the present disclosure, for example, assuming two parties, a first party 310 (e.g., the first party 110 of FIG. 1 or FIG. 2) and a second party 320 (e.g., the second party 120 of FIG. 1 or FIG. 2), participate in the secure MPC. In some implementations, the MPC can include more than two parties, and the example process 300 can be adapted for each of the more than two parties participating in the secure MPC.

At 301, N plaintext values are encrypted, by the first party 310 and using a first encryption method, to obtain one or more ciphertext encapsulations, where N is an integer greater than 1. The plaintext values can refer to unencrypted values relative to the encrypted values encrypted using the first encryption method. For example, the plaintext values can be encrypted values using an encryption method other than the first encryption method. As another example, the plaintext values can be values not encrypted using any encryption method.

In some implementations, a plurality of plaintext values of the N plaintext values are encrypted in each of the one or more ciphertext encapsulations. For example, one ciphertext encapsulation includes multiple plaintext values encrypted using the first encryption method. The number of the plaintext values encrypted in one ciphertext encapsulations may be determined by a parameter that is used to determine the size of one ciphertext encapsulation. For example, the first party 310 may determine the parameter for the first encryption method. Based on the determined parameter, the first party 310 may divide the N plaintext values into groups and encrypt each group of plaintext values into a respective ciphertext encapsulation. In some implementations, the first encryption method includes RLWE cryptography. For example, the first encryption method may be the RLWE-based homomorphic encryption method, and a ciphertext encapsulation can be referred to as a RLWE ciphertext. In some implementations, examples of the RLWE cryptography include Brakerski-Fan-Vercauteren (BFV) cryptography, Brakerski-Gentry-Vaikuntanathan (BGV) cryptography, and Cheon-Kim-Kim-Song (CKKS) cryptography.

Take BFV cryptography as an example. In some implementations, the plaintext space of the BFV cryptography may be a set of polynomials denoted as ${R}_{N , t} = {ℤ}_{t} \left[X\right] / \left({X}^{N}+1\right)$, where *N* defines the polynomial degree and t defines the coefficient modulus. In other words, the plaintext space of the BFV cryptography is integer polynomials with at most N coefficients and each is modulo t. Accordingly, the corresponding ciphertext modulus is denoted as *q* and defines a ciphertext space *R_{N,q}.* In some implementations, using the BFV cryptography as the BFV cryptography, the first party 310 may encrypt a long vector (e.g., a column) as a single ciphertext. In this case, homomorphic encryption such as additive homomorphism over the ciphertext space *R_{N,q}* equals to the vector arithmetic addition, as shown in the following equation (3). $Enc \left(m\right) = \left(b=Δ⋅m+{e}_{0}-a⋅sk,a\right) ∈ {R}_{N , q} \times {R}_{N , q}$ (3) where, m refers to the poly *m* ∈ *R_{N,q}*; Δ is an integer equals to [q/t]; and *a* and *e*₀ are random polys. Thus, in these implementations, N plaintext values are encrypted, by the first party 310 and using the BFV cryptography, to obtain one or more ciphertext encapsulations.

At 302, the one or more ciphertext encapsulations are sent to the second party 320 by the first party 310, for example, through a communication channel, link or other interfaces between the second party 320 by the first party 310.

At 303, K ciphertext values are extracted, by the second party 320, from the one or more ciphertext encapsulations based on a second encryption method, wherein K is an integer greater than 0 and less than N. The K ciphertext values are encrypted values according to a second encryption method. For example, the K ciphertext values are in the same form of values encrypted according to the second encryption method, although the K ciphertext values were originally encrypted according to the first encryption method as described in step 301. In some implementations, the second encryption method includes LWE cryptography. In this case, each of the K ciphertext values can be referred to as a LWE ciphertext. In some implementations, the extracting operations can be performed according to an extraction function. In some implementations, since the RLWE ciphertext can be viewed as an encapsulation of multiple LWE ciphertexts, the extraction operation can extract (or pick) one or more specific encrypted values from a RLWE ciphertext while the extracted specific encrypted values are one or more valid LWE ciphertexts under the same secret key as the RLWE cyphertext. In some implementations, the extraction operation can be based on the second encryption method such as an LWE-based extraction.

For example, in implementations where N plaintext values are encrypted by the first party 310 using the BFV cryptography, a relation between the RLWE-based homomorphic encryption and LWE-based homomorphic encryption may be leveraged to extract values of the BFV ciphertext. As an example, a RLWE ciphertext includes two polynomials (*b, a*), where the corresponding decryption needs one polynomial with a secret key (i.e., *b + a * s*)*.* A LWE ciphertext includes a vector (*c, vec*{*d*}), where *c* is a scalar and *vec*{*d*} is a vector. In this case, the corresponding LWE decryption needs one inner product with the secret key of *c+<\vec*{*d*}, *s* >. Thereby, the RLWE ciphertext can be viewed as LWE ciphertexts written as (*b*[*k*],\*vec*{*a'*}), where *b*[*k*] is the k-th coefficient of the polynomials *b* and *\vec*{*a*'} is vectors generated form the coefficient vector of the polynomials *a.* Specifically, *vec*{*a*'} = [*a*[*k*],*a*[*k -* 1],···,*a*[0],*-a*[*N -* 1],..., *-a*[*k +* 1]]. In this case, given $\left(\hat{b}, \hat{a}\right) = {RLWE}_{pk}^{N , q , p} \left(\hat{m}\right)$ of*m̂*, the second party 320 can extract K ciphertext values from the one or more ciphertext encapsulations according to the following formula (4). $\left(b, a\right) ∈ {ℤ}_{q}^{N + 1} ← Extract \left(\left(\hat{b}, \hat{a}\right), k\right)$ (4) where the extract function can be *Extract*: ${A}_{N , q}^{2} \times \left[N\right] \to {ℤ}_{q}^{N + 1}$. Thus, *b = b̂*[*k*]*,* and ***a** =* [*â*[*k*] *, â*[*k -* 1],···*â*[0],*-*â[*N -* 1],···,*-â*[*k +* 1]. Here, (*b*, ***a***)is a valid LWE ciphertext of the k-th coefficient of *m̂* that is *m̂*[*k*] under the key *sk.* In some implementations, the extract function is computationally efficient, for example, by simply re-ordering the coefficients of *â.* In some implementations, the extract function is used to pick an encrypted computed value (e.g., an inner product) from an RLWE ciphertext.

At 304, masked ciphertexts are obtained, by the second party 320, by masking the K ciphertext values. In some implementations, the masked ciphertexts are obtained by masking the K ciphertext values with random values generated by the second party 320. For example, the second party 320 may generate K random values corresponding to the K ciphertext values and perform mathematical operations on the K ciphertext values with the K random values to obtain K new ciphertexts as the masked ciphertexts. As an example, the second party 320 adds each of the K random value with its corresponding item in the K items to obtain K new ciphertexts as the masked ciphertexts.

In some implementations, the masked ciphertexts can be directly sent to the first party 310 for decryption. For example, at 305, the second party 320 sends the masked ciphertexts to the first party 310, and at 306, the first party 310 decrypts the masked ciphertexts.

As an example, in implementations where N plaintext values are encrypted by the first party 310 using the BFV cryptography, the masked ciphertexts can be decrypted based on *ct =* (*b,a*)*,* such that *b + a* · *sk* mod *R_{N,q} ≈* Δ · *m*.

In some implementations, the masked ciphertexts can be compressed to a smaller size and then sent to the first party 310 for decryption. For example, at 307, the second party 320 performs a packing operation on the masked ciphertexts to obtain a reduced ciphertext. In some implementations, the packing operation includes a compression method based on the second encryption method. As an example, the reduced ciphertext can be obtained by the second party 320 performing a compression method based on the LWE-based homomorphic encryption method, such as LWE ciphertext compression techniques. In some implementations, the reduced ciphertext can be obtained by the second party 320 by encrypting, using the first encryption method, the masked ciphertexts to obtain the reduced ciphertext. For example, the masked ciphertexts can be encrypted into a RLWE ciphertext, which has a smaller size than the masked ciphertexts.

At 308, the reduced ciphertext is sent to the first party 310 by the second party 320, and at 309, the first party 310 decrypts the reduced ciphertext. Steps 308 and 309 can replace steps 305 and 306.

By encrypting, by the first party 310, the N plaintext values to obtain one or more ciphertext encapsulations using the first encryption method, the encryption time is significantly reduced and the size of the ciphertexts sent to the second party 320 is reduced, thereby reducing the communication overhead required for sending the ciphertexts. Moreover, by performing, by the second party 320, the packing operation to the data to be sent back to the first party 310, the size of the data is significantly reduced, and thereby reduce the communication overhead.

FIG. 4 is an example computer or computer-implemented system 400. The system 400 can be used for the operations described in association with the implementations described herein, for example, as a data processing apparatus or server of a party (e.g., one or both of the first party 110 and the second party 120) participating in a MPC instance. For example, the system 400 may be included in computing devices of the one or more online components and/or the one or more offline components. The system 400 includes a processor 410, a memory 420, a storage device 430, and an input/output device 440. The components 410, 420, 430, and 440 are interconnected using a system bus 450. The processor 410 is capable of processing instructions for execution within the system 400. In some implementations, the processor 410 is a single-threaded processor. The processor 410 is a multi-threaded processor. The processor 410 is capable of processing instructions stored in the memory 420 or on the storage device 430 to display graphical information for a user interface on the input/output device 440.

The memory 420 stores information within the system 400. In some implementations, the memory 420 is a computer-readable medium. The memory 420 can be a volatile memory unit or a non-volatile memory unit. The storage device 430 is capable of providing mass storage for the system 400. The storage device 430 is a computer-readable medium. The storage device 430 may be a floppy disk device, a hard disk device, an optical disk device, or a tape device. The input/output device 440 provides input/output operations for the system 400. The input/output device 440 includes a keyboard and/or pointing device. The input/output device 440 includes a display unit for displaying graphical user interfaces.

In this specification the term "engine" will be used broadly to refer to a software based system or subsystem that can perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any disclosure or on the scope of what may be claimed, but rather as descriptions of features that may be specific to particular embodiments of particular disclosures. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method (300) for selecting data using homomorphic encryption, comprising:
encrypting (301), by a first party and using a first encryption method, N plaintext values to obtain one or more ciphertext encapsulations, wherein a plurality of plaintext values of the N plaintext values are encrypted in each of the one or more ciphertext encapsulations, wherein N is an integer greater than 1;
sending (302), by the first party, the one or more ciphertext encapsulations to a second party;
extracting (303), by the second party, K ciphertext values from the one or more ciphertext encapsulations based on a second encryption method, wherein K is an integer greater than 0 and less than N;
masking (304), by the second party, the K ciphertext values to obtain masked ciphertexts; and
sending (305), by the second party, the masked ciphertexts to the first party for decryption.

2. The method (300) of claim 1, wherein the first party participates in secret sharing with the second party, and
wherein the first party receives the masked ciphertexts from the second party, and the first party does not learn the K ciphertext values selected by the second party.

3. The method (300) of claim 1, wherein the first encryption method comprises Ring Learning with Error (RLWE) cryptography, and the second encryption method comprises Learning with Error (LWE) cryptography.

4. The method (300) of claim 1, wherein the encrypting, by a first party and using a first encryption method, N plaintext values to obtain one or more ciphertext encapsulations comprises:
determining, by the first party, a parameter for the first encryption method, wherein the parameter is used to determine a size of one ciphertext encapsulation;
dividing the N plaintext values into one or more groups based on the parameter; and
encrypting each of the one or more groups into a respective ciphertext encapsulation.

5. The method (300) of claim 1, wherein the masking, by the second party, the K ciphertext values to obtain masked ciphertexts comprises:
generating, by the second party, K random values corresponding to the K ciphertext values; and
performing mathematical operations on the K ciphertext values with the K random values to obtain K new ciphertexts as the masked ciphertexts.

6. The method (300) of claim 1, further comprises:
performing (307), by the second party, a packing operation on the masked ciphertexts to obtain a reduced ciphertext, and
wherein the sending, by the second party, the masked ciphertexts to the first party for decryption comprises:
sending (308), by the second party, the reduced ciphertext to the first party.

7. The method (300) of claim 6, wherein performing the packing operation on the masked ciphertexts to obtain a reduced ciphertext comprises:
encrypting, using the first encryption method, the masked ciphertexts to obtain the reduced ciphertext.

8. A method (300) for selecting data using homomorphic encryption, comprising:
encrypting (301), by a first party and using a first encryption method, N plaintext values to obtain one or more ciphertext encapsulations, wherein a plurality of plaintext values of the N plaintext values are encrypted in each of the one or more ciphertext encapsulation, wherein N is an integer greater than 1;
sending (302), by the first party, the one or more ciphertext encapsulations to a second party; and
receiving (305) masked ciphertexts from the second party, wherein the masked ciphertexts are obtained by masking K ciphertext values extracted from the one or more ciphertext encapsulations based on a second encryption method, K is an integer greater than 0 and less than N.

9. The method (300) of claim 8, wherein the first party participates in secret sharing with the second party, and
wherein the first party receives the masked ciphertexts from the second party for decryption, the first party does not learn the K ciphertext values selected by the second party, and the first party does not share unselected ciphertext values from the N ciphertext values with the second party.

10. The method (300) of claim 8, wherein the first encryption method comprises Ring Learning with Error (RLWE) cryptography, and the second encryption method comprises Learning with Error (LWE) cryptography.

11. The method (300) of claim 8, wherein the encrypting, by a first party and using a first encryption method, N plaintext values to obtain one or more ciphertext encapsulations comprises:
determining, by the first party, a parameter for the first encryption method, wherein the parameter is used to determine a size of one ciphertext encapsulation;
dividing the N plaintext values into one or more groups based on the parameter; and
encrypting each of the one or more groups into a respective ciphertext encapsulation.

12. The method (300) of claim 8, wherein receiving masked ciphertexts from the second party for decryption comprises:
receiving (308) a reduced ciphertext from the second party, wherein the reduced ciphertext is obtained by performing a packing operation on the masked ciphertexts.

13. The method (300) of claim 12, wherein the masked ciphertexts is encrypted, using the first encryption method, to obtain the reduced ciphertext.

14. The method of claim 12, further comprising:
decrypting (309) the reduced ciphertext.

15. A method (300) for selecting data using homomorphic encryption, comprising:
receiving (302), by a second party, one or more ciphertext encapsulations from a first party, wherein each of the one or more ciphertext encapsulations comprises a plurality of plaintext values of N plaintext values that are encrypted using a first encryption method, N is an integer greater than 1;
extracting (303), by the second party, K ciphertext values from the one or more ciphertext encapsulations based on a second encryption method, wherein K is an integer greater than 0 and less than N;
masking (304), by the second party, the K ciphertext values to obtain masked ciphertexts; and
sending (305), by the second party, the masked ciphertexts to the first party for decryption.
